(19) Europäisches Patentamt
European Patent Office
Office européen des brevets

(11) Veröffentlichungsnummer: **0 008 606**
**B1**

# (12) EUROPÄISCHE PATENTSCHRIFT

(45) Veröffentlichungstag der Patentschrift: **29.04.81**

(51) Int. Cl.³: **B 27 K 3/52**, B 27 K 3/34, A 01 N 55/04

(21) Anmeldenummer: **79101589.4**

(22) Anmeldetag: **23.05.79**

## (54) Mittel zum Konservieren von Holz und Holzwerkstoffen.

(30) Priorität: **12.07.78 DE 2830503**

(43) Veröffentlichungstag der Anmeldung: **19.03.80 Patentblatt 80/6**

(45) Bekanntmachung des Hinweises auf die Patenterteilung: **29.04.81 Patentblatt 81/17**

(84) Benannte Vertragsstaaten: **BE CH DE FR GB IT LU NL SE**

(56) Entgegenhaltungen:
**DE-A-2 650 579**
**NL-A-6 505 966**

(73) Patentinhaber: **DEUTSCHE SOLVAY-WERKE GMBH, Langhansstrasse 6, D-5650 Solingen 11 (DE)**

(72) Erfinder: **Koddebusch, Hubert, Dipl.-Chem. Dr., Leibnitzstrasse 14, D-4130 Moers-Vinn (DE)**
Erfinder: **Hiller, Joh.-Christian, Dipl.-Chem. Dr., Prinz-Ferdinand-Strasse 11, D-4150 Krefeld (DE)**

EP 0 008 606 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

BUNDESDRUCKEREI BERLIN

Mittel zum Konservieren von Holz und Holzwerkstoffen

Die vorliegende Erfindung betrifft ein Mittel zum Konservieren von Holz und Holzwerkstoffen auf der Basis einer oder mehrerer fungizider, tetravalenter, zinnorganischer Verbindungen und mindestens einem organisch-chemischen Insektizid auf der Basis eines Carbamates und/oder Phosphorsäureesters, Thiophosphorsäureesters oder eines Thionophosphorsäureesters und mindestens einem organisch-chemischen Lösungsmittel sowie ggf. Zusätzen von Farbstoffen, Pigmenten, wasserabweisenden Mitteln. Geruchskorrigentien und Inhibitoren bzw. Korrosionsschutzmitteln, wobei das Konservierungsmittel zusätzlich mindestens eine Säure und/oder deren sauer reagierende Säureester enthält.

Es ist bereits bekannt, fungizide, tetravalente, zinnorganische Verbindungen in Holzschutzmitteln einzusetzen und diese mit anderen insektizid wirkenden Stoffen für Holzschutzzwecke zu verwenden. Im Rahmen der Erfindung wurde jedoch festgestellt, daß die fungiziden, tetravalenten, zinnorganischen Verbindungen in Kombination mit einem insektiziden Carbamat und/oder Phosphorsäureester, Thiophosphorsäureester oder einem Thionophosphorsäureester nach einer gewissen Zeit der Lagerung oder Aufbewahrung des Holzkonservierungsmittels dazu führen, daß chemische Reaktionen und Zersetzungsvorgänge oder ähnliche stoffliche Veränderungen im Holzkonservierungsmittel auftreten, die zu einer Trübung, in einigen Fällen zu Ausfällungen oder zu einem Wirkungsabfall des Holzkonservierungsmittels führen.

Ziel und Aufgabe der vorliegenden Erfindung war es daher, diese Nachteile zu vermeiden und ein Konservierungsmittel zu finden, das in der Kombination der vorgenannten insektiziden Wirkstoffe mit den fungiziden, tetravalenten, zinnorganischen Verbindungen derartige Nachteile nicht aufweist.

Ein weiteres Ziel bestand darin, ein Konservierungsmittel mit einer verbesserten Wirksamkeit zu entwickeln.

Erfindungsgemäß wurde festgestellt, daß diesen Aufgaben ein Mittel zum Konservieren von Holz und Holzwerkstoffen auf der Basis einer oder mehrerer fungizider, tetravalenter, zinnorganischer Verbindungen und mindestens einem organisch-chemischen Insektizid auf der Basis eines Carbamates und/oder Phosphorsäureesters, Thiophosphorsäureesters oder Thionophosphorsäureesters und mindestens einem organisch-chemischen Lösungsmittel sowie gegebenenfalls Zusätzen von Farbstoffen, Pigmenten, wasserabweisenden Mitteln, Geruchskorrigentien und Inhibitoren bzw. Korrosionsschutzmitteln, gerecht wird, das zusätzlich Phosphorsäure, vorzugsweise ortho-Phosphorsäure und/oder deren partielle, sauer reagierende Ester enthält.

Das Konservierungsmittel besteht gemäß der Erfindung aus Massenanteilen von ca. 0,3 bis ca. 10% (Gew.-%), vorzugsweise 0,5 bis 5% (Gew.-%), mindestens einer fungiziden, tetravalenten, in einem organisch-chemischen, schwerflüchtigen, öligen oder ölartigen Lösungsmittel oder Lösungsmittelgemisch mit einer Verdunstungszahl über 35 und einem Flammpunkt über 30° C, vorzugsweise über 55° C, löslichen, zinnorganischen Verbindung und ca. 0,1 bis ca. 7% (Gew.-%), vorzugsweise 0,5 bis 5% (Gew.-%), mindestens eines in einem organisch-chemischen, schwerflüchtigen, öligen oder ölartigen Lösungsmittel oder Lösungsmittelgemisch mit einer Verdunstungszahl über 35 und einem Flammpunkt über 30° C, vorzugsweise über 55° C, löslichen insektiziden Carbamates, Phosphorsäureesters, Thiophosphorsäureesters und/oder insektiziden Thionophosphorsäureesters und ca. 0,05 bis ca. 4% (Gew.-%), vorzugsweise 0,1 bis 2% (Gew.-%), Phosphorsäure, vorzugsweise ortho-Phosphorsäure und/oder deren partieller sauer reagierenden Ester sowie mehr als 65% (Gew.-%), vorzugsweise mehr als 75% (Gew.-%), eines schwerflüchtigen, öligen oder ölartigen, organisch-chemischen Lösungsmittels oder Lösungsmittelgemisches mit einer Verdunstungszahl über 35 und einem Flammpunkt über 30° C, vorzugsweise über 55° C.

Es werden nach einer vorzugsweisen Ausführungsform ca. 0,5 bis ca. 10% (Gew.-%), vorzugsweise 1 bis 5% (Gew.-%), des schwerflüchtigen, öligen oder ölartigen, organisch-chemischen Lösungsmittels mit einer Verdunstungszahl über 35 und einem Flammpunkt über 30° C, vorzugsweise über 55° C durch einen Lösungsvermittler für die Säure, vorzugsweise durch einen Lösungsvermittler auf der Basis eines organischen, polaren Lösungsmittels und/oder eines Lösungsmittels mit einer mittleren Polarität ersetzt.

Nach einer vorzugsweisen Ausführungsform besteht das Konservierungsmittel aus Massenanteilen von ca. 0,3 bis ca. 10% (Gew.-%), vorzugsweise 0,5 bis 5% (Gew.-%), mindestens einer fungiziden, tetravalenten, in einem organisch-chemischen, schwerflüchtigen, öligen oder ölartigen Lösungsmittel oder Lösungsmittelgemisch mit einer Verdunstungszahl über 35 und einem Flammpunkt über 30° C, vorzugsweise über 55° C, löslichen, zinnorganischen Verbindung und ca. 0,1 bis ca. 7% (Gew.-%), vorzugsweise 0,5 bis 5% (Gew.-%), mindestens eines in einem organisch-chemischen, schwerflüchtigen, öligen oder ölartigen Lösungsmittel oder Lösungsmittelgemisch mit einer Verdunstungszahl über 35 und einem Flammpunkt über 30° C, vorzugsweise über 55° C, löslichen insektiziden Carbamates und/oder Phosphorsäureesters, Thiophosphorsäureesters und/oder insektiziden Thionophosphorsäureesters und ca. 0,05 bis ca. 4% (Gew.-%), vorzugsweise 0,1 bis 2% (Gew.-%), Phosphorsäure, vorzugsweise ortho-Phosphorsäure und/oder deren partielle sauer reagierenden Ester, die in dem öligen oder ölartigen Lösungsmittel oder Lösungsmittelgemisch löslich ist bzw. sind

und/oder unter Verwendung eines Lösungsvermittlers löslich ist bzw. sind und die eingesetzten Wirkstoffe nicht zersetzen oder ausfällen sowie mehr als 65% (Gew.-%), vorzugsweise mehr als 75% (Gew.-%), eines schwerflüchtigen, öligen oder ölartigen, organisch-chemischen Lösungsmittels oder Lösungsmittelgemisches mit einer Verdunstungszahl über 35 und einem Flammpunkt über 30° C, vorzugsweise über 55° C, wobei nach einer vorteilhaften Ausführungsform ca. 0,5 bis ca. 10% (Gew.-%), vorzugsweise 1 bis 5% (Gew.-%), des schwerflüchtigen, öligen oder ölartigen, organisch-chemischen Lösungsmittels mit einer Verdunstungszahl über 35 und einem Flammpunkt über 30° C, vorzugsweise über 55° C, durch einen Lösungsvermittler für die Säure und/oder Säureester, vorzugsweise durch einen Lösungsvermittler auf der Basis eines organischen, polaren Lösungsmittels und/oder eines Lösungsmittels mit einer mittleren Polarität ersetzt sind.

Nach einer weiteren Ausführungsform sind ca. 0,5 bis ca. 15% (Gew.-%), vorzugsweise 1 bis 5% (Gew.-%), des organischen, schwerflüchtigen, öligen oder ölartigen Lösungsmittels bzw. Lösungsmittelgemisches mit einer Verdunstungszahl über 35 und einem Flammpunkt oberhalb 30° C, vorzugsweise über 55° C, durch die gleiche Menge eines oder mehrerer organisch-chemischer Bindemittel und/oder Fixierungsmittel ersetzt, wobei als organisch-chemische Bindemittel und/oder Fixierungsmittel solche eingesetzt werden, die in dem öligen oder ölartigen Lösungsmittel bzw. Lösungsmittelgemisch verteilbar bzw. emulgierbar, vorzugsweise jedoch löslich sind.

Als Bindemittel wird in einer besonders zweckmäßigen Ausführungsform Kunstharz in Form einer Emulsion, Dispersion oder Lösung, vorzugsweise Alkydharz bzw. modifizierte Alkydharze oder Phenolharz und/oder Inden-Cumaron-Harze verwendet. Als Bindemittel können auch Bitumen oder bituminöse Substanzen bis zu 15 Gew.-%, vorzugsweise bis zu 15 Gew.-%, vorzugsweise bis zu 5 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel u. dgl. eingesetzt werden. Als wasserabweisende Mittel werden Paraffine, Wachse, Wollfett u. dgl. in Gewichtsmengen von 0,2 bis 5 Gew.-%, vorzugsweise 0,5 bis 2 Gew.-%, bezogen auf das Holzschutzmittel, eingesetzt.

Als Fixierungsmittel bzw. Weichmacher werden vor allem solche Verbindungen eingesetzt, die zusätzlich eine Verflüchtigung der Wirkstoffe und/oder eine Kristallisation bzw. Ausfällung verhindern sollen. Vorzugsweise werden

a) Weichmacher, z. B. Alkyl-, Aryl- oder Aralkyl-phthalate, vorzugsweise Dibutyl-, Dioctyl- und Benzylbutylphthalate, Alkylphosphate bzw. Phosphorsäureester, vorzugsweise Tributylphosphat, Adipinsäureester, vorzugsweise Di-(2-äthyl-hexyl)-adipinsäureester, Stearate und Oleate, z. B. Alkylstearate oder Alkyloleate, vorzugsweise Butyloleat, Butylstearat oder Amylstearat, Bis-(dimethylbenzyl)äther, p-Toluol-sulfonsäureäthylester, Glycerinester, Glycerinäther oder höhermolekulare Glykoläther und/oder
b) Öle, z. B. Leinöl, Rizinusöl, Tallöl (eine natürliche Mischung von Harzsäuren) und deren Ester und/oder
c) Fixierungsmittel auf der Basis von Ketonen und/oder Polyvinylalkyläthern, z. B. Ketone mit Alkyl-, Aryl- oder Aralkylgruppen, vorzugsweise Benzophenon, Äthylbenzophenon; Polyvinylalkyläther, vorzugsweise Polyvinylmethyläther

verwendet.

Als organische schwerflüchtige ölige oder ölartige Lösungsmittel mit einer Verdunstungszahl von über 35 und einem Flammpunkt von oberhalb 30° C, vorzugsweise oberhalb 55° C, werden vorteilhaft wasserunlösliche oder kaum wasserlösliche Lösungsmittel eingesetzt. Als derartige Lösungsmittel werden entsprechende Mineralöle oder deren Aromatenfraktionen oder mineralölhaltige Lösungsmittelgemische, vorzugsweise Testbenzin, Petroleum, Gasöl und/oder Alkylbenzol usw. verwendet.

Vorzugsweise gelangen Mineralöle mit einem Siedebereich von 170 bis 220° C, Testbenzin mit einem Siedebereich von 170 bis 220° C, Spindelöl mit einem Siedebereich von 250° C bis 350° C, Petroleum bzw. Aromaten vom Siedebereich 160 bis 280° C, Terpentinöl u. dgl. zum Einsatz. Ferner kann man gemäß einer speziellen Ausführungsform auch hochsiedende Gemische von aromatischen und aliphatischen Kohlenwasserstoffen mit einem Siedebereich von 180 bis ca. 220° C und/oder Spindelöl und/oder Monochlornaphthalin, vorzugsweise $\alpha$-Monochlornaphthalin, verwenden.

Die organischen schwerflüchtigen öligen oder ölartigen Lösungsmittel, vorzugsweise aus der Reihe der Mineralöle mit einer Verdunstungszahl von über 35 und einem Flammpunkt von oberhalb 30° C, vorzugsweise oberhalb 55° C, können teilweise durch leicht- oder mittelflüchtige organisch-chemische Lösungsmittel ersetzt werden, mit der Maßgabe, daß das Lösungsmittelgemisch ebenfalls eine Verdunstungszahl von über 35 und einem Flammpunkt oberhalb 30° C, vorzugsweise oberhalb 55° C, aufweist und daß das Fungizid bzw. Fungizidgemisch in diesem Lösungsmittelgemisch löslich ist. Dabei sollte das Fungizid bzw. Fungizidgemisch mindestens genau so gut löslich sein wie in den vorgenannten öligen oder ölartigen Lösungsmitteln. Es wurde festgestellt, daß je nach Verdunstungszahl und Flammpunkt des verwendeten öligen oder ölartigen Lösungsmittels das organische schwerflüchtige ölige oder ölartige Lösungsmittel bis zu 20 Gew.-%, vorzugsweise bis zu 5 Gew.-%, durch ein Lösungsmittel mit einer niedrigeren Verdunstungszahl ersetzt werden kann.

Werden jedoch nach der vorzugsweisen Ausführungsform Lösungsvermittler eingesetzt, so muß bei dem Einsatz von Lösungsvermittlern mit einer niedrigen Verdunstungszahl und einem niedrigen Flammpunkt darauf geachtet werden, daß zusätzlich eingesetzte Lösungsmittel mit einer niedrigen Verdunstungszahl nicht eine zu starke Herabsetzung des Flammpunktes und der Verdunstungszahl bewirken und daß der Flammpunkt des gesamten Lösungsmittelgemisches über 30°C, vorzugsweise über 55°C bleibt und auch die Verdunstungszahl des gesamten Lösungsmittelgemisches über 35 aufrechterhalten wird

Nach einer Ausführungsform wird die fungizide, tetravalente, organische Zinnverbindung (bezogen auf die Massenanteile der einzusetzenden fungiziden, tetravalenten, organischen Zinnverbindung bzw. Zinnverbindungen) bis zu 60% (Gew.-%), vorzugsweise bis zu 40% (Gew.-%), durch eine oder mehrere andere in dem organisch-chemischen, schwerflüchtigen, öligen oder ölartigen Lösungsmittel mit einer Verdunstungszahl über 35 und einem Flammpunkt über 30°C, vorzugsweise über 55°C, lösliche Fungizide, die gegenüber der eingesetzten Säure bzw. dem sauer reagierenden Säureester und Säurekonzentrat beständig ist bzw. sind, ersetzt.

Als Mischungspartner eignen sich vor allem das N,N-Dimethyl-N'-phenyl-N'-fluordichlormethylthiosulfamid der Formel

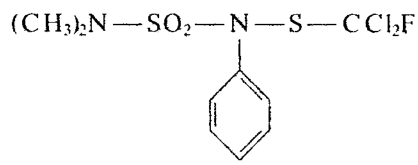

und/oder N-Fluordichlormethylthio-phthalimid der Formel

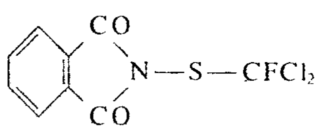

und/oder das Bis-phenyl-(3-trifluormethyl-phenyl)-1-(2,3,4-triazolyl)-methan der Formel

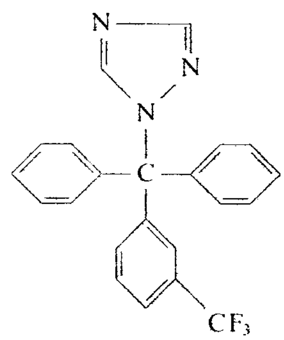

oder andere in dem organisch-chemischen schwerflüchtigen, öligen oder ölartigen Lösungsmittel mit einer Verdunstungszahl von über 35 und einem Flammpunkt von über 30°C, vorzugsweise über 55°C, lösliche Fungizide oder Mischungen dieser mit den vorgenannten Fungiziden, so z. B. fungizide öllösliche Naphthenate, vorzugsweise Zink- und/oder Kupfernaphthenate; 8-Oxychinolin bzw. dessen fungizide öllösliche Salze oder Derivate, vorzugsweise Phenylquecksilber-8-oxychinolat; fungizide Verbindungen bzw. Derivate oder Gemische von Chlorphenolen, vorzugsweise Verbindungen oder Gemische von Penta- und/oder Tetrachlorphenol mit schwerflüchtigen Aminen, z. B. Rosinamin; Nitrophenole bzw. Nitrochlorphenole und/oder Nitrochlorbenzole, insbesondere 1,2-Dinitrotetrachlorbenzol und/oder Benzimidazol-2-carbamidsäuremethylester und/oder öllösliche fungizid wirksame metallhaltige, organische Verbindungen, z. B. von Kupfer, Zink, Mangan, Kobalt, Chrom oder Quecksilber, z. B. in Form von Caprylaten, Naphthenaten, Oleaten u. dgl.; fungizide Tris(N-cyclohexyl-diazeniumdioxy)-Metallchelate, vorzugsweise des Aluminiums und/oder N-Trichlormethylthiotetrahydrophthalimid. Bei der Verwendung einer der vorgenannten mitverwendeten Fungizide, z. B. bei der Mitverwendung des Tris(N-cyclohexyl-diazeniumdioxy)aluminiums muß jedoch berücksichtigt werden, daß diese fungiziden Verbindungen nur für bestimmte Holzarten bzw. Holzpilze geeignet sind. In den Fungizidgemischen können auch Teeröldestillate und/oder Teeröle teilweise mitverwendet werden.

Als fungizide tetravalente zinnorganische Verbindungen werden die bekannten öllöslichen tetravalenten zinnorganischen Verbindungen verwendet, so z. B.:

Bis-(tri-n-butylzinn)-oxid, Tri-n-butylzinn-trichloracetat, Tri-n-butylzinnacetat,
Tri-n-butylzinn-8-oxychinolin, Tri-n-butylzinn-pentachlorphenolat,
Tri-n-butylzinn-bisäthylendithiocarbamat, Tri-n-butylzinnbenzoylcyanoessigsäure,
Tri-n-butylzinn-dimethyl-arsensäure, Tri-n-butylzinn-fluorid,
Tri-n-butylzinn-rhodanid, Tri-n-butylzinn-dichlorphenolat,
sowie das Addukt Tri-n-butylzinn-acrylat/Hexachlorcyclopentadien.

Nach einer anderen Ausführungsform wird das Insektizid auf der Basis eines Carbamates und/oder Phosphorsäureesters, Thiophosphorsäureesters oder Thionophosphorsäureesters (bezogen auf die Massenanteile der einzusetzenden insektiziden Carbamate und/oder Phosphorsäureester, Thiophosphorsäureester oder Thionophosphorsäureester) bis zu 60% (Gew.-%), vorzugsweise bis zu 40% (Gew.-%), durch eine oder mehrere andere in dem organischen-chemischen, schwerflüchtigen, öligen oder ölartigen Lösungsmittel mit einer Verdunstungszahl über 35 und einem Flammpunkt über 30°C, vorzugsweise über 55°C, lösliche Insektizide, die gegenüber der bzw. den eingesetzten Säuren und/oder dem bzw. den eingesetzten sauer reagierenden Säureestern beständig ist bzw. sind, ersetzt. Als insektizide Mischungsbestandteile können insektizide, halogenierte Kohlenwasserstoffe und/oder Pyrethrum und Pyrethroide sowie gegebenenfalls Wachstumsregulatoren Verwendung finden.

Als insektizide Carbamate werden die an sich bekannten insektiziden Carbamate, insbesondere Alkoxyphenyl-N-alkylcarbamat und/oder Alkylphenyl-N-alkylcarbamat, 2-Isopropoxy-phenyl-N-Methylcarbamat und/oder Butylphenyl-N-methylcarbamat verwendet. Als insektizide Phosphorsäureester, Thiophosphorsäureester oder Thionophosphorsäureester werden insektizide, halogenierte oder halogengruppenfreie Phosphorsäureester, Thiophosphorsäureester oder Thionophosphorsäureester eingesetzt. Vorzugsweise finden Thionophosphorsäureester der allgemeinen Formel

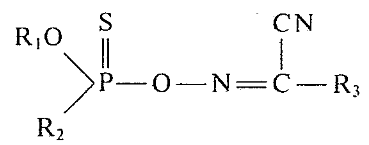

wobei in der Formel $R_1$ ein Alkylrest mit 1—4 C-Atomen, $R_2$ ein Alkylrest oder eine Alkoxygruppe mit 1—4 C-Atomen oder ein Phenylrest und $R_3$ ein Phenylrest oder ein durch 1—3 Halogenatome oder durch niedere Alkyl- oder Alkoxygruppen substituierter Phenylrest bedeutet, Verwendung.

Nach einer vorzugsweisen Ausführungsform enthält das Insektizidgemisch ein Alkoxy-phenyl-N-alkylcarbamat der allgemeinen Formel

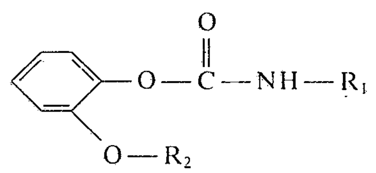

und/oder ein Alkylphenyl-N-alkylcarbamat der allgemeinen Formel

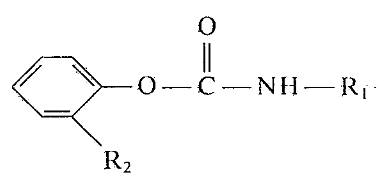

worin jeweils $R_1$ ein Alkylrest mit 1 bis 4 C-Atomen, vorzugsweise ein Methylrest steht und für $R_2$ ein Alkylrest mit 1 bis 5 C-Atomen, vorzugsweise ein Alkylrest mit 3 oder 4 C-Atomen, steht.

Weiterhin wird vorzugsweise als halogenierter oder halogengruppenfreier Thio- und/oder Thionophosphorsäureester ein Ester der Formel

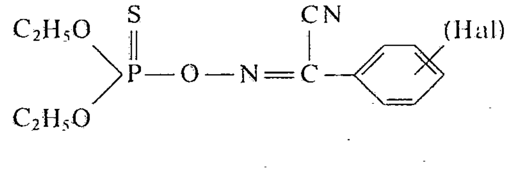

vorzugsweise (Diäthoxy-thiophosphoryloxyimino)-phenylacetonitril bzw. O,O-Diäthyl-O-(Alpha-

cyanbenzylidenamino)thionophosphat und/oder (Diäthoxy-thiophosphoryloxyimino)-2-Chlorphenylacetonitril verwendet.

Bevorzugt wird ein Insektizidgemisch aus Carbamat und Phosphorsäureester oder Thiophosphorsäureester und/oder Thionophosphorsäureester im Gewichtsverhältnis 3 : 1 bis 1 : 3, vorzugsweise 1 : 0,75 bis 1 : 2 verwendet.

Nach einer bevorzugten Ausführungsform sind die fungiziden, tetravalenten, zinnorganischen Verbindungen, ggf. in Kombination mit anderen Fungiziden, zu den Insektiziden im Massenverhältnis von 9 : 1 bis 1 : 9, vorzugsweise 3 : 1 bis 1 : 3, im Holzkonservierungsmittel enthalten.

Der Zusatz der Phosphorsäure und/oder deren sauer reagierenden Säureester kann derart erfolgen, daß die Säure bzw. der sauer reagierende Ester im Mischungsbestandteil bei der Herstellung unmittelbar zugeführt wird oder durch getrennte Zugabe bei der Herstellung oder nach der Herstellung des Holzkonservierungsmittels.

**Patentansprüche**

1. Mittel zum Konservieren von Holz und Holzwerkstoffen auf der Basis

(I) einer oder mehrerer fungizider, tetravalenter, zinnorganischer Verbindungen
(II) und mindestens einem organisch-chemischen Insektizid auf der Basis eines Carbamates und/oder Phosphorsäureesters, Thiophosphorsäureesters oder eines Thionophosphorsäureesters
(III) und mindestens einem organisch-chemischen Lösungsmittel oder Lösungsmittelgemisch

sowie ggf. Zusätzen von Farbstoffen, Pigmenten, wasserabweisenden Mitteln, Geruchskorrigentien und Inhibitoren bzw. Korrosionsschutzmitteln, dadurch gekennzeichnet, daß das Konservierungsmittel

(IV) zusätzlich Phosphorsäure, vorzugsweise ortho-Phosphorsäure, und/oder deren partielle, sauer reagierende Ester enthält.

2. Mittel nach Anspruch 1, gekennzeichnet durch

mehr als 65 Gew.-%, vorzugsweise
mehr als 75 Gew.-%,

eines schwerflüchtigen, öligen oder ölartigen, organisch-chemischen Lösungsmittels (III) mit einer Verdunstungszahl über 35 und einem Flammpunkt über 30° C, vorzugsweise über 55° C, in dem

0,3 bis 10 Gew.-% der Verbindung(en) (I),
0,1 bis 7 Gew.-%, vorzugsweise
0,5 bis 5 Gew.-%, der Verbindung(en) (II)

gelöst sind, und

0,05 bis 4 Gew.-%, vorzugsweise
0,1 bis 2 Gew.-%,

der Verbindung(en) (IV).

3. Mittel nach Anspruch 2, gekennzeichnet durch

0,5 bis 10 Gew.-%, vorzugsweise
1 bis 5 Gew.-%,

des schwerflüchtigen Lösungsmittels (III) nach Anspruch 2 durch einen Lösungsvermittler (V) für die Säure, vorzugsweise durch einen Lösungsvermittler auf der Basis eines organischen, polaren Lösungsmittels und/oder eines Lösungsmittels mit einer mittleren Polarität ersetzt ist.

4. Mittel nach Anspruch 2 oder 3, dadurch gekennzeichnet, daß

0,5 bis 15 Gew.-%, vorzugsweise
1 bis 5 Gew.-%,

des organischen Lösungsmittels nach Anspruch 2 durch die gleiche Menge eines oder mehrerer organisch-chemischer Bindemittel (VI) und/oder Fixierungsmittel (VII) ersetzt sind, wobei als organisch-chemische Bindemittel und/oder Fixierungsmittel solche eingesetzt werden, die in dem Lösungsmittel verteilbar bzw. emulgierbar, vorzugsweise jedoch löslich sind.

5. Mittel nach Ansprüchen 1 bis 4, dadurch gekennzeichnet, daß die Verbindung(en) (I)

bis zu 60 Gew.-%, vorzugsweise
bis zu 40 Gew.-%,

durch eine oder mehrere andere in dem Lösungsmittel nach Anspruch 2 lösliche Fungizide, die gegenüber der eingesetzten Säure bzw. dem sauer reagierenden Säureester und deren Konzentrationen beständig ist bzw. sind, ersetzt ist.

6. Mittel nach Ansprüchen 1 bis 5, dadurch gekennzeichnet, daß die Verbindung(en) (II)

bis zu 60 Gew.-%, vorzugsweise
bis zu 40 Gew.-%,

durch eine oder mehrere andere in dem Lösungsmittel nach Anspruch 2 lösliche Insektizide, die gegenüber der bzw. den eingesetzten Säuren und/oder dem bzw. den eingesetzten sauer reagierenden Säureestern beständig ist bzw. sind, ersetzt ist.

7. Mittel nach Ansprüchen 1 bis 6, dadurch gekennzeichnet, daß die fungiziden, tetravalenten, zinnorganischen Verbindungen (I) für sich allein oder in Kombination mit anderen Fungiziden, zu den Insektiziden (II) im Massenverhältnis von

9 : 1 bis 1 : 9, vorzugsweise
3 : 1 bis 1 : 3,

im Holzkonservierungsmittel enthalten sind.

**Claims**

1. Agent for preserving wood and timber materials based on

(I) one or more fungicidal, tetravalent organo-tin compounds
(II) and at least one organo-chemical insecticide based on a carbamate and/or phosphoric acid ester, thiophosphoric acid ester or a thionophosphoric acid ester
(III) and at least one organo-chemical solvent or solvent mixture,

and, optionally, additions of dyestuffs, pigments, water-repelling agents, odour correctants and inhibitors or anticorrosion agents, characterised in that the preserving agent

(IV) additionally contains phosphoric acid, preferably orthophosphoric acid, and/or partial esters thereof which have an acid reaction.

2. Agent according to claim 1, characterised by

more than 65% by weight, preferably
more than 75% by weight,

of a difficultly volatile, oily, or oil-like, organo-chemical solvent (III) which has an evaporation number greater than 35 and a flash point above 30° C, preferably above 55° C, in which

0,3 to 10% by weight of the compound(s) (I)
0,1 to 7% by weight, preferably
0,5 to 5% by weight, of the compound(s) (II)

are dissolved, and

0,05 to 4% by weight, preferably
0,1 to 2% by weight,

of the compound(s) (IV).

3. Agent according to claim 2, characterised by

0,5 to 10% by weight, preferably
1 to 5% by weight,

of the difficultly volatile solvent (III) according to claim 2 being replaced by a solubilising agent (V) for

the acid, preferably by a solubilising agent based on an organic, polar solvent and/or a solvent of medium polarity.

4. Agent according to claim 2 or 3, characterised in that

0,5 to 15% by weight, preferably
1 to 5% by weight,

of the organic solvent according to claim 2 is replaced by the same amount of one or more organo-chemical binders (VI) and/or fixing agents (VII), the organo-chemical binders and/or fixing agents employed being those which are dispersible or emulsifiable, but preferably soluble in the solvent.

5. Agent according to claims 1 to 4, characterised in that

up to 60% by weight, preferably
up to 40% by weight,

of the compound(s) (I) ist replaced by one or more other fungicides which is/are soluble in the solvent according to claim 2 and is/are stable towards the acid employed or the acid ester having an acid reaction, and to the concentrations thereof.

6. Agent according to claims 1 to 5, characterised in that

up to 60% by weight, preferably
up to 40% by weight,

of the compound(s) (II) is replaced by one or more other insecticides which is/are soluble in the solvent according to claim 2 and which is/are stable towards the acid or acids employed and/or the acid ester or esters having an acid reaction which is/are employed.

7. Agent according to claims 1 to 6, characterised in that the agent for preserving wood contains the fungicidal, tetravalent, organotin compounds (I), by themselves or in combination with other fungicides, and the insecticides (II) in a weight ratio of

9 : 1 to 1 : 9, preferably
3 : 1 to 1 : 3.

**Revendications**

1. Agent pour la conservation du bois et de matériaux en bois, à base de

I) un ou plusieurs composés organiques de l'étain tétravalent fongicides,
II) et au moins un insecticide chimique organique à base d'un carbamate et/ou d'un ester d'acide phosphorique, d'acide thiophosphorique ou d'acide thionophosphorique
III) et au moins un solvant chimique organique ou un mélange de solvants chimiques organiques,

et contenant éventuellement, à titre d'additifs, des colorants, des pigments, des agents hydrofuges, des correcteurs olfactifs et des inhibiteurs de corrosion, respectivement des agents de protection contre la corrosion, caractérisé en ce qu'il contient en outre

IV) de l'acide phosphorique, de préférence de l'acide orthophosphorique, et/ou un ester partiel à réaction acide de celui-ci.

2. Agent selon la revendication 1, caractérisé en ce qu'il comprend

plus de 65% en poids, de préférence
plus de 75% en poids,

d'un solvant chimique organique (III) peu volatil, de nature huileuse ou oléagineuse, ayant un indice d'évaporation supérieur à 35 et un point d'éclair supérieur à 30° C, de préférence supérieur à 55° C, dans lequel sont dissous

0,3 à 10% en poids du ou des composé(s) (I)
0,1 à 7% en poids, de préférence
0,5 à 5% en poids, du ou des composé(s) (II)
0,05 à 4% en poids, de préférence
0,1 à 2% en poids, du ou des composé(s) (IV).

3. Agent selon la revendication 2, caractérisé en ce que

0,5 à 10% en poids, de préférence
1 à 5% en poids,

du solvant peu volatil (III) selon la revendication 2 sont remplacés par un solvant médiateur (V) de l'acide, de préférence par un solvant médiateur à base d'un solvant organique polaire et/ou d'un solvant de polarité moyenne.

4. Agent selon l'une des revendications 2 ou 3, caractérisé en ce que

0,5 à 15% en poids, de préférence
1 à 5% en poids,

du solvant organique selon la revendication 2 sont remplacés par la même quantité d'un ou plusieurs liants chimiques organiques (VI) et/ou agents de fixation chimiques organiques (VII), ces liants et/ou agents de fixation étant choisis parmi ceux qui sont dispersibles, respectivement émulsionnables, de préférence toutefois solubles dans le solvant.

5. Agent selon les revendications 1 à 4, caractérisé en ce que le ou les composé(s) (I) est (sont) remplacé(s),

jusqu'à 60% en poids, de préférence
jusqu'à 40% en poids,

par un ou plusieurs autres fongicides solubles dans le solvant selon la revendication 2, ce ou ces fongicide(s) étant stable(s) en présence de l'acide respectivement de l'ester à réaction acide utilisé et des concentrations de ceux-ci.

6. Agent selon les revendications 1 à 5, caractérisé en ce que le ou les composé(s) (II) est (sont) remplacé(s)

jusqu'à 60% en poids, de préférence
jusqu'à 40% en poids,

par un ou plusieurs autres insecticides solubles dans le solvant selon la revendication 2, ce ou ces insecticide(s) étant stable(s) en présence de l'acide ou des acides, respectivement de l'ester ou des esters à réaction acide utilisés, et des concentrations de ceux-ci.

7. Agent selon les revendications 1 à 6, caractérisé en ce qu'il contient les composés organiques d'étain tétravalent fongicides (I), seuls ou en combinaison avec d'autres fongicides, et les insecticides (II) sont contenus dans l'agent de conservation du bois en une proportion pondérale comprise entre

9 : 1 et 1 : 9, de préférence entre
3 : 1 et 1 : 3.